(19) Europäisches Patentamt
European Patent Office
Office européen des brevets

(11) EP 3 185 540 A1

(12) EUROPEAN PATENT APPLICATION

(43) Date of publication:
28.06.2017 Bulletin 2017/26

(51) Int Cl.:
H04N 5/232 (2006.01)      H04N 5/238 (2006.01)
H04N 5/225 (2006.01)      G02B 3/14 (2006.01)
G02F 1/29 (2006.01)

(21) Application number: 15307076.8

(22) Date of filing: 21.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• BOREL, Thierry
  35576 Cesson-Sévigné (FR)
• VANDAME, Benoît
  35576 Cesson-Sévigné (FR)
• BLONDE, Laurent
  35576 Cesson-Sévigné (FR)

(74) Representative: Huchet, Anne
TECHNICOLOR
1-5, rue Jeanne d'Arc
92130 Issy-les-Moulineaux (FR)

(54) **A METHOD FOR OPERATING A PLENOPTIC CAMERA AND A CORRESPONDING PLENOPTIC CAMERA**

(57) A method for operating a plenoptic camera (100) having an electrically controllable array of microlenses (160) in accordance with a user-selected main lens aperture size, includes (a) adjusting focal length of the electrically controllable array of microlenses, while (b) adjusting the distance of the electrically controllable array of microlenses relative to an array of sensors (14) in the camera so that a ratio of focal distance of the electrically controllable array of microlenses to distance of the electrically controllable array of microlenses to the array of sensors in the camera matches the user-selected main lens aperture size.

FIG. 8

## Description

### TECHNICAL FIELD

The present principles relate to microlens array cameras often known as plenoptic cameras.

### BACKGROUND ART

A plenoptic camera, sometimes referred to as a light-field or micro lens camera, captures images using a single lens disposed in front of a microlens array of individual microlenses that focuses the image onto an array of sensors. Each sensor within the array of sensors captures a portion of the image behind a corresponding microlens. The plenoptic camera generates a composite image from the multiple sub-images captured by the sensors in the sensor array.

Plenoptic cameras afford the ability to acquire different views of the same image. To obtain such different views, the raw image captured by the sensors in the array of sensors undergoes demosaicing and de-multiplexing. The demosaicing of the raw image enables recovery of full color information, e.g., RGB information, RGB standing for "Red", "Green" and "Blue" for the pixels of the raw image. Ordinarily, the raw image acquired by the plenoptic camera only associates one color component (R, G or B for example) with each pixel. The demultiplexing performed after the demosaicing enables recovery of different views of the scene by grouping selected pixels of the demosaiced raw image according to the view to which they belong.

Presently there exist two different types of plenoptic cameras, often referred to as plenoptic camera 1.0 and plenoptic camera 2.0. The microlenses of the first type of plenoptic camera (plenoptic camera 1.0) have the same focal length. In contrast, the microlenses of the second type of plenoptic camera (plenoptic camera 2.0) can have different focal lengths. Further, the first type of plenoptic camera has its sensors placed at the focal plane of the microlens array. The second type of plenoptic camera has its sensors placed farther from the focal length of any of the microlenses in the array of microlenses. The first type of plenoptic camera offers good angular resolution. The second type of plenoptic camera sacrifices angular resolution to obtain better spatial resolution.

In conventional plenoptic camera of both types, the focal distance and position of array of microlenses relative to the array of sensors remains fixed. While it is possible to replace the main lens with another one, the aperture size (sometimes referred to the f-stop or f-number) must remain constant and equal to the focal length of the array of microlenses divided by the size of an individual microlens. The need to keep the aperture size constant limits the flexibility to the camera in the hands of an experienced photographer.

### BRIEF SUMMARY

Briefly, in accordance with an aspect of the present principles, a method for operating a plenoptic camera having an electrically controllable array of microlenses in accordance with a user-selected main lens aperture size, includes (a) adjusting focal length of the electrically controllable array of microlenses, while (b) adjusting the distance of the electrically controllable array of microlenses relative to an array of sensors on the camera so that a ratio of focal distance of the electrically controllable array of microlenses to distance of the electrically controllable array of microlenses to the array of sensors in the camera matches the user-selected main lens aperture size.

Briefly, in accordance with another aspect of the present principles, a plenoptic camera comprises a main lens having a user-selected aperture size. An array of sensors lies aligned with the main lens to capture the light focused by that lens. A controllable array of microlenses lies disposed between the sensor array and the main lens, with the microlenses of the controllable array in registration with the sensors of the array. A controllable element serves to displace the electrically controllable array of microlenses relative to the array of sensors. A controller controls the electrically controllable array of microlenses and the electrically controllable element to (a) adjust the focal length of the electrically controllable array of microlenses while (b) adjusting the distance of the electrically controllable array of microlenses from the array of sensors to match a ratio of the user-selected main lens aperture size to a ratio of the electrically controllable array of microlenses focal distance to the distance of the electrically controllable array of microlenses from the array of sensors.

It is an object of the present principles to provide a plenoptic camera that automatically adjusts to a main lens aperture setting selected by a user.

It is a further object of the present principles to provide either of a plenoptic 1.0 camera or plenoptic 2.0 camera that automatically adjusts to a main lens aperture setting selected by a user.

### BRIEF DESCRIPTION OF THE DRAWINGS

FIGURE 1 depicts a schematic view of a plenoptic 1.0 camera in accordance with the prior art;
FIGURE 2 depicts a schematic view of a plenoptic 2.0 camera in accordance with the prior art;
FIGURE 3 depicts the plenoptic camera of FIG. 1 and illustrates how increasing the focal length of the main lens within the camera leads to less registration of the image on the array of sensors in the camera;
FIGURE 4 depicts the plenoptic camera of FIG. 1 and illustrates how keeping the ratio of focal length of the main lens to the focus distance of the array of microlenses assures registration of all views;

FIGURE 5 depicts the plenoptic camera of FIG. 1 and illustrates how reducing the aperture size of the main lens leads to less registration of the image on an array of sensors in the camera;

FIGURE 6 depicts the plenoptic camera of FIG. 1 and illustrates how increasing the focus distance of the array of microlenses can maintain registration of all views when the main lens aperture is reduced;

FIGURES 7A and 7B depict the plenoptic camera of FIG 1 for a first and second focus distance of the main lens, respectively; and

FIGURE 8 depicts a block schematic diagram of a plenoptic camera in accordance with an aspect of the present principles having a controllable array of microlenses with a variable focus distance and a controllable element for displacing an electrically controllable array of microlenses relative to the array of sensors in the camera.

DETAILED DESCRIPTION

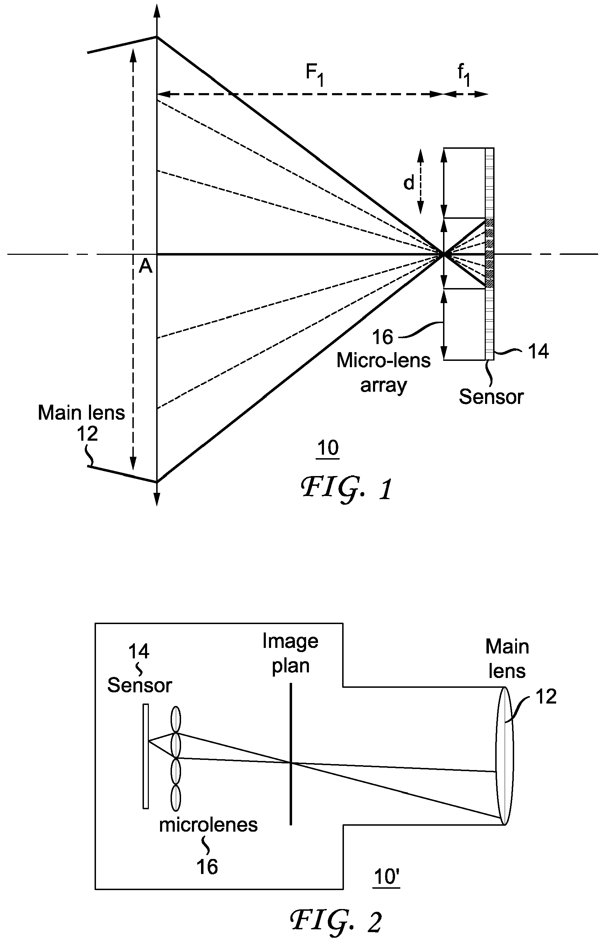

FIGURE 1 depicts a simplified schematic view of a plenoptic 1.0 camera 10 in accordance with the prior art. The plenoptic camera 10 includes a main lens 12 and an array of sensors 12 (e.g., light sensing elements such as charge coupled devices (CCDs) or the like well-known in the art), with the array of sensors aligned with the main lens to receive light focused thereby. An array 16 of microlenses lies between the main lens 12 and the array of sensors 14, with the microlenses of the array of microlenses lying in registration with the sensors of the array of sensors. In practice, the plenoptic camera 10 of FIG. 1 will include other elements, such as a mechanical structure for mounting the main lens 12, the array of sensors 14 and the array of microlenses 16, as well as electronic circuitry for processing the output signals of the sensors to generate an image. For the sake of simplicity, these additional elements have been omitted from FIG. 1.

For the plenoptic camera 10 of FIG. 1, the focus distance of the microlenses (f) in the array of microlenses 16 directly depends of the focal length (F) of the main lens 12 and its aperture size (opening) (A). Assuming each lens of the array of microlenses has a size d, the following equation describes the relationship among F, f, A and d:

$$F \, / \, f = A \, / \, d \qquad \text{Equation (1)}$$

Rather than express the aperture of the main lens 12 in terms of its size A, the aperture can be expressed using f-numbers (or f-stops) (N), such that

$$A = F/N \qquad \text{Equation (2)}$$

Which gives rise to the following relationship:

$$f = d \times N \qquad \text{Equation (3)}$$

Consequently, plenoptic cameras, such as camera 10 of FIG. 1 work with one only value of f-numbers such that

$$N = f/d \qquad \text{Equation (4)}$$

The value of this f-number depends on the design of the array of microlenses 16 of FIG. 1. Any time the user changes the main lens 12 to obtain a larger focal length, the user must choose the right f-Number to assure proper operation of the plenoptic camera 10, thereby avoiding a failure of the camera to register all views as described hereinafter.

FIGURE 2 depicts a simplified view of a prior art plenoptic 2.0 camera 10'. The plenoptic camera 10' has the same structure as the plenoptic camera 10 of FIG. 1 and like reference numbers reference like elements. As discussed previously, the microlenses of the array of microlenses 16 of the plenoptic camera 10' can have different focal lengths as compared to the microlenses in the array of microlenses 16 of the camera 10 of FIG. 1 which all have the same focal length. Further, the array of sensors 14 of the plenoptic camera 10' of FIG. 2 lies beyond the focal plane of the array of microlenses 16, whereas with the camera 10 of FIG. 1, the array of sensors 12 lies at the focal plane of the array of microlenses 16. The camera 10' of FIG. 2 suffers from the same deficiency as the camera 10 of FIG. 1, namely the inability to work with more than one value of f-numbers (i.e., aperture size.) of the main lens 12

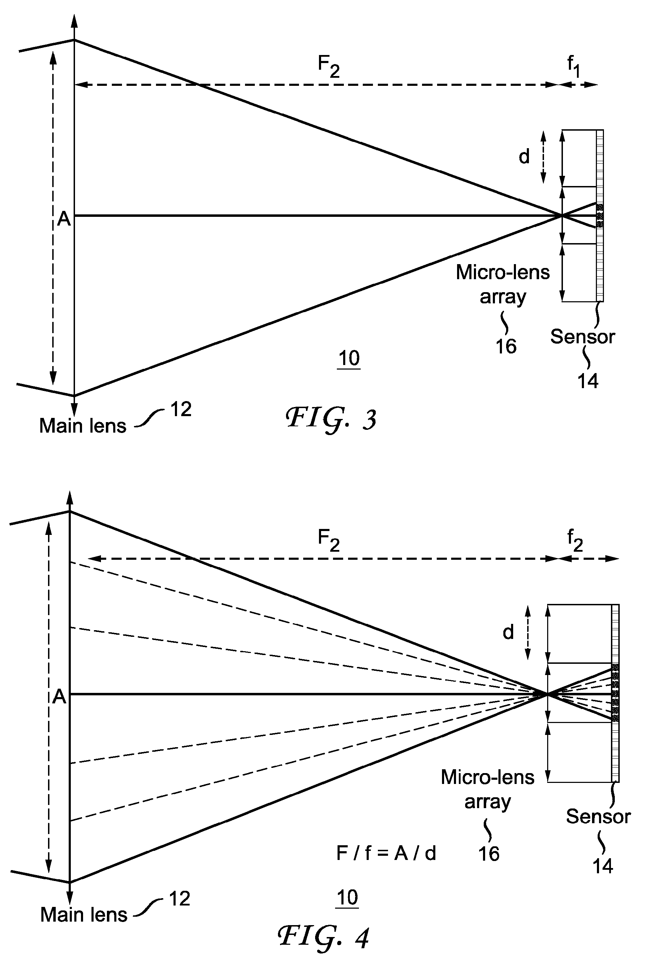

To better understand inability of present day plenoptic cameras to work with more than one f-number, refer to FIGS. 3-7 which depict different examples of focal length and aperture variations for the plenoptic camera 10 of FIG 1. As depicted in FIG. 3, increasing the focal length (focus distance) of the main lens 12 within the camera 10 leads to less registration of the image on the array of sensors 14. FIGURE 4 again depicts the plenoptic camera 10 and illustrates how keeping the ratio of focal length of the main lens 12 (F) to focus distance (f) of the array of microlenses 16 (F/f = A/d) assures registration of all views on array of microlenses.

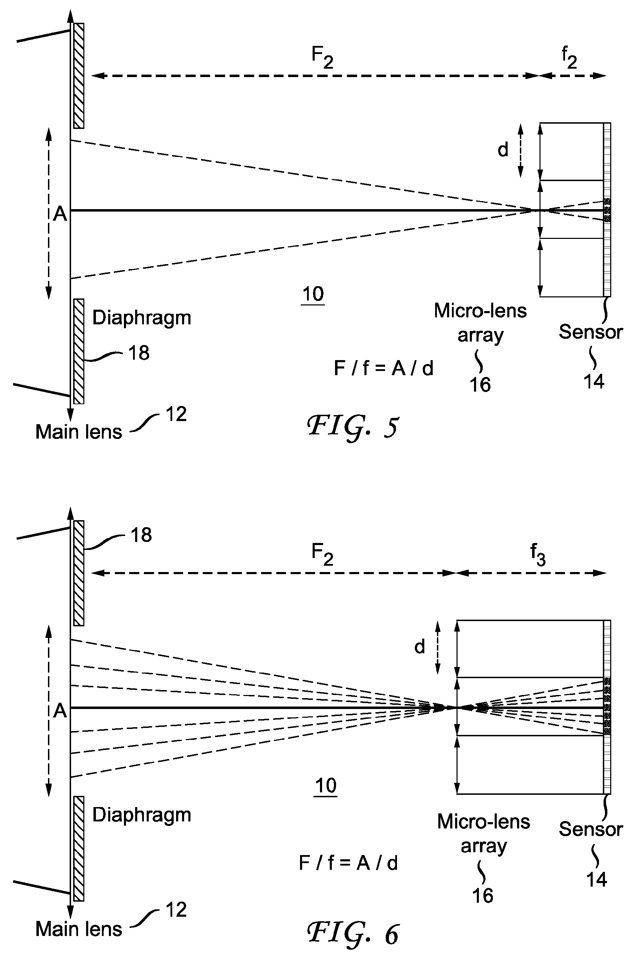

As depicted in FIG. 5, reducing the aperture size of the main lens 12 of the camera 10 via a diaphragm 18 leads to less registration of the image on an array of sensors 14. However, as depicted in FIG. 6, increasing the focus distance (f2) of the array of microlenses 16 of the camera 10 can maintain registration of all views on the array of sensors 14 even for the main lens 12 having a reduced aperture. However, unless the distance of the array of microlenses 16 from the array of sensors 14 changes along with the micro lens focal distance, the image captured by the array of sensors will appear blurry.

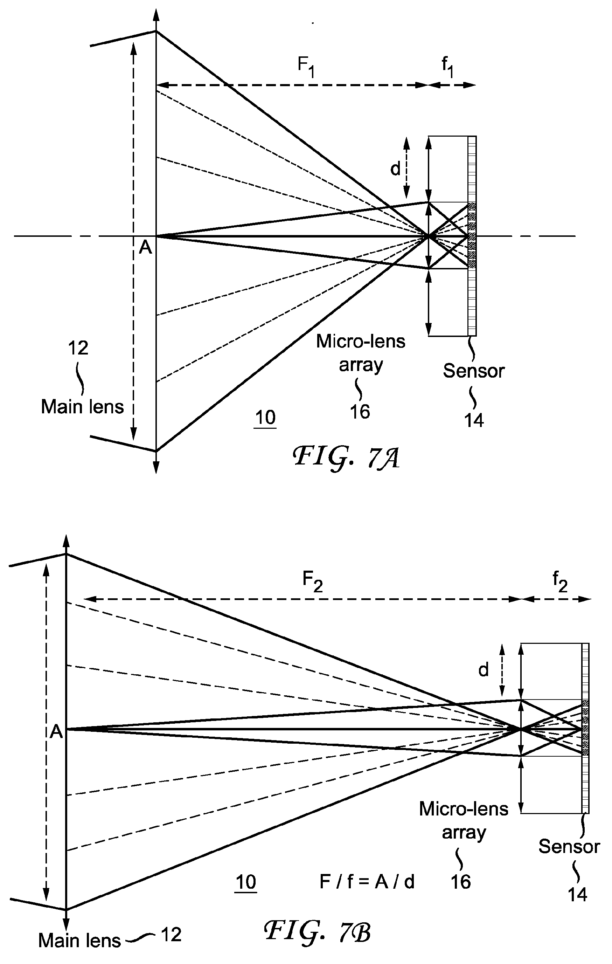

FIGURES 7A and 7B depict the plenoptic camera 10 of FIG 1 for first and second focus distances of the main lens 12, respectively. FIGS 7A and 7B illustrate the need to change both the focus distance of the main lens 12 and the distance of the array of microlens 16 from the array of sensors 14 in accordance with the teachings of the present principles to register all views for different main lens aperture sizes.

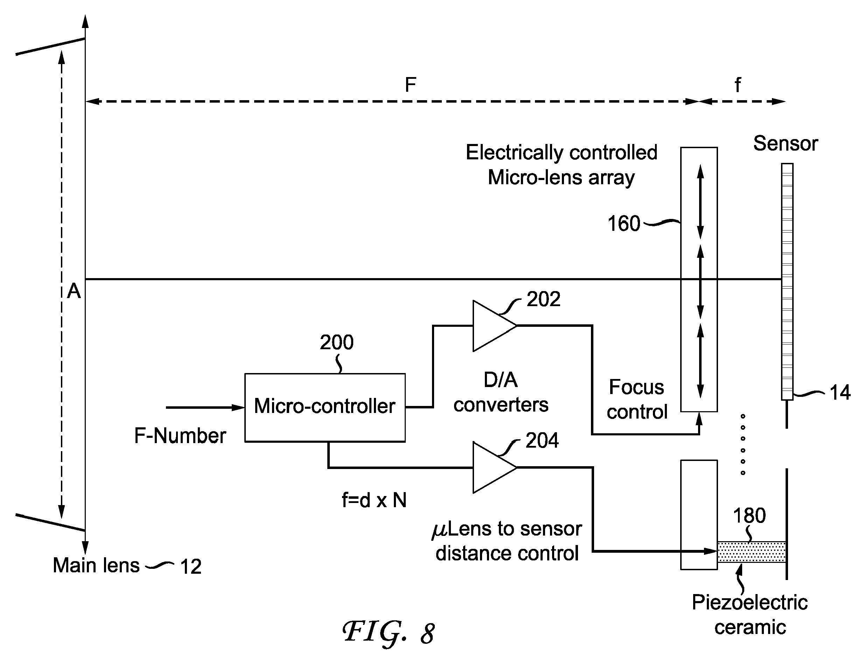

FIGURE 8 depicts a block schematic diagram of a plenoptic camera 100 in accordance with an aspect of the present principles, which can readily operate as either a plenoptic 1.0 camera or as a plenoptic 2.0 camera. The camera 100 of FIG. 8 shares certain elements in common with the camera 10 and 10' of FIGS 1 and 2, respectively. Thus, the camera 100 of FIG. 8 includes a main lens 12 and an array of sensors 14 with the array of sensors aligned with the main lens to receive light focused thereby. In place of the array of microlenses 16 of FIGS. 1-7, the camera 100 includes an electrically controllably array of microlenses 160, as is well known in the art, in registration with the sensors of the array of sensors 14 Such electrically controllable arrays of microlenses can have different structures, but the most common structure (e.g., the structure of microlens array 160 in the illustrative embodiment of FIG. 8) makes use of liquid crystal cells embedded in a transparent material (not shown). Applying an electric field to this type of electrically controllable array of microlenses changes the orientation of the molecules in the structure, thereby changing their refractive index. In this way, it becomes possible to adjust the focal length of electrically controllable array of microlenses 160 by applying an electrical potential thereto.

The camera 100 of FIG. 8 also includes a controllable displacement element 180 or prime mover, which in the illustrated embodiment takes the form of a piezoelectric structure for displacing the electrically controllable array of microlenses 160 relative to the array of sensors 14 to vary the focus distance of the electrically controllable array of microlenses. The controllable displacement element could also comprise an electric motor (not shown).

Still referring to FIG. 8, the plenoptic camera 100 of the present principles includes a controller 200, typically in the form of a microprocessor or microcomputer or the like for controlling the electrically controllably array of microlenses 160 and the electrically controllable displacement 180 element. As discussed further, the controller 200 controls the electrically controllably array of microlenses 160 and the electrically controllable displacement 180 element to (a) adjust the focal length of the microlens array while (b) adjusting microlens array distance to the array of sensors 14 so the ratio of microlens focal distance to the microlens array distance to the array of sensors sensor matches the user-selected main lens aperture size.

The controller 200 of the plenoptic camera 100 of FIG. 8 will know the f-number (aperture size) of the main lens 12, as selected by the user. Further, the controller 200 of FIG. 8 knows the size d of the electrically controllable array of microlenses 160, which remains constant for a given camera. The controller 200 will also know the electrical responses of the electrically controllable array of microlenses 160 and the controllable element 180 as follows:

focus = g(Voltage) for the electrically controllable array of microlenses,
focus distance = h(Voltage) for controllable element 180.

The controller 200 can compute in real time the simple function focus= dxN and generate the necessary digital values corresponding to the needed voltages for the electrically controllable array of microlenses 160 and the controllable element 180. A pair of Digital-to-Analog converters (DACs) 202 and 204 connect the controller 200 to the electrically controllable array of microlenses 160 and the controllable element 180, respectively, to provide the corresponding voltage thereto.

The foregoing describes a plenoptic camera that automatically adjusts to a main lens aperture setting selected by a user.

## Claims

1. A method for operating a plenoptic camera having an electrically controllable array of microlenses (160) in accordance with a user-selected main lens aperture size, **CHARACTERIZED BY**

    (a) adjusting focal length of the electrically controllable array of microlenses (160), while
    (b) adjusting distance of the electrically controllable array of microlenses (160) relative to an array of sensors (14) in the camera so that a ratio of focal distance of the electrically controllable array of microlenses (160) to distance of the electrically controllable array of microlenses (160) relative to an array of sensors (14) in the camera matches the user-selected main lens aperture size.

2. The method according to claim 1 wherein adjusting distance of the electrically array of microlenses (160) relative to the array of sensors (14) in the camera includes applying a driving voltage to a controllable element (180) that mechanically displaces the electrically array of microlenses (160) relative to the array of sensors (14).

3. The method according to claim 1 wherein adjusting focal length of the electrically controllable array of microlenses (160) includes applying a driving voltage to the electrically controllable array of microlenses (160) to adjust its refractive index.

4. A plenoptic camera (100) comprising,
a main lens (12); and
an array of sensors (14) aligned with the main lens to capture the light focused by the main lens, **CHARACTERIZED BY**:

the main lens having an adjustable aperture selected by a user
an electrically controllable array of microlenses (160) disposed between the array of sensors and the main lens, with the microlenses of the controllable array in registration with the sensors of the array;
a controllable element (180) for displacing the electrically controllable array of microlenses relative to the array of sensors;
a controller (200, 202, and 204) for controlling the electrically controllable array of microlenses and the controllable element to (a) adjust the focal length of the electrically controllable array of microlenses while (b) adjusting distance of the electrically controllable array of microlenses from the array of sensors to match the user-selected main lens aperture size to a ratio of the electrically controllable array of microlenses focal distance to the distance of the electrically controllable array of microlenses from the array of sensors.

5. The plenoptic camera according to claim 4 wherein the electrically controllable array of microlenses (160) includes liquid crystal cells embedded in a transparent material to its change refractive index responding to driving voltage.

6. The plenoptic camera according to claim 4 wherein the electrically controllable element (180) includes a piezo electric ceramic mechanism.

7. The plenoptic camera according to claim 4 wherein the controller includes:

a microprocessor; and
first and second digital-to-analog converters (202 and 204) for connecting the microprocessor to the electrically controllable array of microlenses (160) and the electrically controllable element (180) .

8. The plenoptic camera according to claim 4 wherein the electrically controllable array of microlenses (16) has its microlenses of the same focal length.

9. The plenoptic camera according to claim 4 wherein the electrically controllable array of microlenses (160) has its microlenses of different focal lengths.

EP 3 185 540 A1

$F_1$  $f_1$

d

16
Micro-lens
array

14

Sensor

Main lens
12

A

10

*FIG. 1*

14
Sensor

Image
plan

Main
lens

12

microlenes

16

10'

*FIG. 2*

6

$F_2$
$f_1$
d
A
Micro-lens array
16
Sensor
14
Main lens 12
10
*FIG. 3*

$F_2$
$f_2$
d
A
Micro-lens array
16
$F / f = A / d$
Sensor
14
Main lens 12
10
*FIG. 4*

F / f = A / d

*FIG. 5*

F / f = A / d

*FIG. 6*

$F_1$    $f_1$

d

12

Main lens

Micro-lens
array

Sensor

10    16    14

*FIG. 7A*

$F_2$    $f_2$

d

A

Micro-lens
array

Sensor

10    F / f = A / d    16    14

Main lens — 12

*FIG. 7B*

*FIG. 8*

Europäisches
Patentamt

European
Patent Office

Office européen
des brevets

## EUROPEAN SEARCH REPORT

Application Number

EP 15 30 7076

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 305 429 B2 (KAJIHARA JUNJI [JP] ET AL) 6 November 2012 (2012-11-06) | 1-7 | INV. H04N5/232 H04N5/238 H04N5/225 G02B3/14 |
| Y | * figures 5,6,7A-7D * * column 16, line 17 - column 17, line 65 * ----- | 8,9 | |
| Y | US 2015/358531 A1 (XU JING [CN] ET AL) 10 December 2015 (2015-12-10) * paragraph [0003] - paragraph [0004] * ----- | 8,9 | ADD. G02F1/29 |

TECHNICAL FIELDS
SEARCHED      (IPC)

H04N
G02B
G02F

The present search report has been drawn up for all claims

| Place of search | Date of completion of the search | Examiner |
|---|---|---|
| The Hague | 25 May 2016 | Wentzel, Jürgen |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

...................................................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 15 30 7076

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2016

| Patent document cited in search report | | Publication date | Patent family member(s) | | Publication date |
|---|---|---|---|---|---|
| US 8305429 | B2 | 06-11-2012 | CN | 101554042 A | 07-10-2009 |
| | | | EP | 2104334 A1 | 23-09-2009 |
| | | | JP | 5040493 B2 | 03-10-2012 |
| | | | JP | 2008167395 A | 17-07-2008 |
| | | | US | 2010066812 A1 | 18-03-2010 |
| US 2015358531 | A1 | 10-12-2015 | CN | 104580877 A | 29-04-2015 |
| | | | EP | 2963914 A1 | 06-01-2016 |
| | | | US | 2015358531 A1 | 10-12-2015 |
| | | | WO | 2015062215 A1 | 07-05-2015 |

EPO FORM P0459

For more details about this annex : see Official Journal of the European Patent Office, No. 12/82